# EUROPÄISCHE PATENTSCHRIFT

(11) **EP 0 614 427 B1**
(45) Veröffentlichungstag und Bekanntmachung des Hinweises auf die Patenterteilung: **21.02.1996**
(21) Anmeldenummer: 92922881.5
(22) Anmeldetag: 02.11.1992
(51) Int. Cl.: B60T 13/565, B60T 11/224

(54) **BETÄTIGUNGSEINHEIT FÜR EINE HYDRAULISCHE BREMSANLAGE**
ACTUATING UNIT FOR A HYDRAULIC BRAKING SYSTEM
UNITE DE COMMANDE D'UN SYSTEME DE FREINAGE HYDRAULIQUE

(30) Priorität: 05.12.1991 DE 4140066
(43) Veröffentlichungstag der Anmeldung: 14.09.1994
(73) Patentinhaber: ITT Automotive Europe GmbH, D-60488 Frankfurt am Main (DE)
(72) Erfinder: WAGNER, Wilfried, D-6338 Hüttenberg 7 (DE); SCHIEL, Lothar, D-6238 Hofheim 6 (DE)
(86) Internationale Anmeldenummer: EP9202509
(87) Internationale Veröffentlichungsnummer: WO9311010

(56) Entgegenhaltungen:
- DE-A- 3 317 996
- GB-A- 2 203 812
- US-A- 2 941 368

## Beschreibung

Die vorliegende Erfindung betrifft eine Betätigungseinheit für eine hydraulische Bremsanlage die im Oberbegriff des Anspruches 1 beschrieben ist.

Eine derartige Betätigungseinheit ist aus der DE-PS 33 17 996 bekannt. Der Ringkolben der vorbekannten Betätigungseinheit ist hohl und besteht aus einer zylindrischen Innenwand sowie einer zylindrischen Außenwand, die an einem Ende miteinander verbunden sind und am anderen Ende einen offenen Ringraum begrenzen, wobei die zylindrische Außenwand durch im Hauptzylindergehäuse angeordnete Dichtelemente hindurch in einen Füllraum mit ringförmigem Querschnitt an dem dem Bremskraftverstärker zugewandten Ende des Hauptbremszylinders hineinbewegbar ist und wobei der Füllraum radial außenliegend koaxial zum ersten Druckraum des Hauptbremszylinders ausgebildet ist, der durch einen den Primärkolben bildenden, die zylindrische Innenwand verschließenden Boden begrenzt ist.

Weniger vorteilhaft anzusehen sind bei der vorbekannten Betätigungseinheit ihre beträchtliche axiale Baulänge sowie der sehr aufwendige Gesamtaufbau. Ein weiterer Nachteil kann auch darin gesehen werden, daß das bei Betätigung durch den Ringkolben über ein kompliziertes Ventil in einen Ausgleichsbehälter verdrängte Druckmittelvolumen über den gesamten Hub des Hauptbremszylinders verschoben wird. Bei einer langsamen Betätigung strömt das erwähnte Druckmittelvolumen über im Ventil vorgesehene Drosselbohrungen in den Ausgleichsbehälter, so daß keine Füllwirkung und somit keine Verkürzung des Betätigungsweges erreicht wird. Bei schneller Betätigung wird dagegen im Füllraum ein Staudruck aufgebaut, so daß eine den Primärkolben abdichtende Dichtmanschette überströmt und der Druck im Primärdruckraum so lange erhöht wird, bis das Ventil durch den Staudruck geöffnet wird. Dies hat jedoch ein undefiniertes, vom Druck im Füllraum abhängiges Füllen zur Folge. Schließlich wird bei der vorbekannten Betätigungseinheit auch der langsam verlaufende Lösevorgang als nachteilig empfunden, bei dem sowohl der Primär- als auch der Füllraum lediglich über die vorhin erwähnten Drosselbohrungen nachgefüllt werden.

Aus der US-A-2,941,368 ist ein Hauptbremszylinder bekannt, der einen einen Druckraum begrenzenden Kolben sowie einen mit dem Kolben in Wirkverbindung stehenden Ringkolben gleichen Durchmessers, aufweist. Der Ringkolben dient dabei zur Steuerung der hydraulischen Verbindung zwischen einem dem Druckraum zugeordneten Nachlaufraum und einer vom Ringkolben begrenzten Kammer. Bei Erreichen eines vorgegebenen Druckes im Druckraum wird eine Ventileinrichtung betätigt, die ein Umschalten der wirksamen Fläche des Kolbens auf eine kleinere Fläche ermöglicht.

Es ist Aufgabe der vorliegenden Erfindung eine Betätigungseinheit für hydraulische Bremsanlagen der eingangs genannten Gattung vorzuschlagen, die mit einem von der Betätigungsgeschwindigkeit unabhängigen, eindeutig definierbaren Umschaltdruck und Leerweg arbeitet. Außerdem soll dafür gesorgt werden, daß das Verschieben des Füllvolumens durch den Ringkolben nicht über den gesamten Hauptzylinderhub erfolgt.

Diese Aufgabe wird erfindungsgemäß dadurch gelöst, daß der Ringkolben vom Kolben wirkungsmäßig trennbar ist, wenn der auf den Ringkolben wirkende hydraulische Druck einen vorbestimmbaren Wert erreicht. Dabei ist es sinnvoll, wenn der auf den Ringkolben wirkende Druck der im Druckraum des Hauptbremszylinders herrschende Druck ist. Dadurch wird erreicht, daß die Füllstufe lediglich bis zu einem bestimmten Druck im Einsatz ist und danach völlig wirkungslos wird. Die gesamte Betätigungseinheit kann deshalb kleiner und somit billiger werden.

Eine Begrenzung des maximal möglichen Hubes des Ringkolbens, mit dem beispielsweise bei einem Ausfall des an den Druckraum angeschlossenen hydraulischen Kreises zu rechnen ist, wird bei einer vorteilhaften Weiterbildung des Erfindungsgegenstandes dadurch erreicht, daß der Ringkolben nach der Trennung auf dem Kolben verschiebbar angeordnet ist und mit einem Anschlag zusammenwirkt.

Eine weitere vorteilhafte Ausführung der Erfindung sieht vor, daß der Füllraum als Nachlaufraum für den vom Kolben begrenzten hydraulischen Druckraum dient. Durch diese Maßnahme wird der im Druckraum des Hauptbremszylinders bei der Betätigung zurückzulegende Leerweg eliminiert, so daß eine Einengung von auftretenden Toleranzen ermöglicht wird.

Eine weitere Ausführungsvariante der Erfindung, die insbesondere für blockiergeschützte (ABS-) Bremsanlagen geeignet ist, zeichnet sich dadurch aus, daß zwischen dem Füllraum und dem Druckraum ein im Kolben angeordnetes Zentralventil vorgesehen ist.

Das Zentralventil ist bei einer weiteren vorteilhaften Ausgestaltung der Erfindung mittels eines senkrecht zur Längsachse des Kolbens stehenden Stiftes betätigbar, der in einer axialen Verlängerung des Ringkolbens angeordnet ist. Durch diese Maßnahme wird eine erhebliche Verbesserung der Führung des Ringkolbens auf dem Hauptzylinderkolben erreicht.

Eine zusätzliche Verkürzung der axialen Baulänge wird nach einem weiteren Erfindungsmerkmal dadurch erreicht, daß das Zentralventil mittels eines senkrecht zur Längsachse des Kolbens stehenden Stiftes betätigbar ist, der in einem auf dem Kolben aufgeschobenen Ring angeordnet ist, der bis zum Erreichen des vorgegebenen Druckes im Druckraum am Ringkolben anliegt.

Gemäß einer weiteren bevorzugten Ausführungsform der Erfindung ist zwischen dem Kolben und dem Ringkolben eine lösbare Arretierungseinrichtung vorgesehen, die bis zum Erreichen des vorgegebenen Druckes ein Mitnehmen des Ringkolbens vom Kolben ermöglicht. Dadurch wird erreicht, daß der Ringkolben nicht den gesamten Betätigungshub des Hauptzylinderkolbens zurücklegen muß, so daß der Einfluß der den Ringkolben abdichtenden Dichtelemente eliminiert wird. Gleichzeitig wird durch diese Maßnahme eine Verkürzung der Baulänge erzielt.

Eine kostengünstig herstellbare Ausführungsvariante der Erfindung sieht vor, daß die Arretierungseinrichtung durch eine oder mehrere federnd vorgespannte, im Kolben bzw. Ringkolben geführte Kugeln gebildet ist, die mit einer im Ringkolben bzw. Kolben ausgebildeten Schräge zusammenwirken.

Eine besonders genaue Einstellung des auf den Ringkolben einwirkenden Umschaltdruckes wird bei einer weiteren Ausgestaltung des Erfindungsgegenstandes dadurch ermöglicht, daß die Arretierungseinrichtung durch ein oder mehrere, in radialen Bohrungen im Kolben angeordnete Arretierungsglieder gebildet ist, die einerseits mit einer im Ringkolben ausgebildeten ersten Schräge und andererseits mit einer zweiten Schräge zusammenwirken, die an einem im Kolben verschiebbar geführten, mit dem im Druckraum herrschenden Druck beaufschlagbaren, federnd vorgespannten Betätigungskolben ausgebildet ist.

Eine besonders kostengünstig herstellbare Ausführung des Erfindungsgegenstandes zeichnet sich dadurch aus, daß die Arretierungseinrichtung durch eine auf dem Kolben aufgeschobene, radial aufweitbare Hülse gebildet ist, deren radialer Kragen mit einer im Kolben ausgebildeten Ringnut zusammenwirkt. Die Ringnut wird dabei vorzugsweise von zwei schräg verlaufenden Flanken unterschiedlicher Steigung begrenzt, wobei der radiale Kragen radial nach innen durch eine erste konische Ringfläche begrenzt wird, an die eine zweite konische Ringfläche anschließt, die mit der Flanke größerer Steigung zusammenwirkt. Durch diese Maßnahmen wird eine lösbare Verbindung zwischen Ringkolben und Kolben erreicht, die nach deren Trennung eine minimale Reibung verursacht.

Bei einer anderen bevorzugten Ausgestaltung des Erfindungsgegenstandes ist zwischen dem Ringkolben und der Hülse eine Feder angeordnet, die eine Kraftübertragung von der Hülse auf den Ringkolben ermöglicht. Dadurch wird erreicht, daß die zwischen den beiden Kolben wirkende Entriegelungskraft exakt definierbar und ggf. einstellbar ist.

Eine andere vorteilhafte Weiterbildung der Erfindung sieht vor, daß der Ringkolben eine radiale Ringnut aufweist, die bei der Betätigung bzw. dem Überwinden der Kraft der Feder ein radiales Aufweiten der Hülse ermöglicht. Durch die Gestaltung des Übergangs zwischen dem den Kragen der Hülse führenden Bereichs und der radialen Ringnut im Ringkolben bzw. die Auslegung der Federkraft kann die vorhin erwähnte Reibung beeinflußt werden.

Eine Verbesserung der Kraftübertragung zwischen Hülse und Ringkolben wird nach einem weiteren Erfindungsmerkmal dadurch erreicht, daß die Feder an einem am Kragen anliegenden Führungsteil abgestützt ist, dessen zylindrische Fläche am Boden der im Ringkolben ausgebildeten radialen Ringnut geführt wird.

Eine weitere bevorzugte Ausgestaltung des Erfindungsgegenstandes sieht vor, daß der Kragen der Hülse in einen kegelstumpfförmigen Bereich übergeht, an den ein zylindrischer Abschnitt anschließt, dessen Innendurchmesser dem Durchmesser des Kolbens entspricht. Die Hülse weist dabei mehrere an ihrem Umfang regelmäßig verteilte axiale Schlitze auf, die den Kragen in einzelne Segmente unterteilen und am Übergang zwischen dem kegelstumpfförmigen Bereich und dem zylindrischen Abschnitt enden. Diese Maßnahmen ermöglichen eine einwandfreie Anpassung der Hülse an den Kolben bei gleichzeitiger Erleichterung deren Aufweitung bei der Trennung der beiden Kolben.

Eine geräusch- und verschleißarme Ausführung der Hülse zeichnet sich schließlich dadurch aus, daß die Hülse aus Kunststoff besteht.

Ein ungehindertes Einströmen des Druckmittelvolumens in den an den Druckraum angeschlossenen Bremskreis wird nach einem weiteren Erfindungsmerkmal dadurch erreicht, daß der Füllraum bis zum Erreichen des vorgegebenen Druckes im Druckraum mit dem Druckraum in Verbindung steht. Außerdem wird durch diese Maßnahme der Umschaltdruck exakt definierbar.

Bei einer bevorzugten Weiterbildung des Erfindungsgegenstandes ist der auf den Ringkolben wirkende Druck der im Füllraum herrschende hydraulische Druck. Dadurch wird sichergestellt, daß im Füllraum nach dem Abschalten der Füllstufe keine unerwünschten Volumenänderungen auftreten. Dabei ist es besonders sinnvoll, wenn das Zentralventil mittels eines senkrecht zur Längsachse des Kolbens stehenden Stiftes betätigbar ist, der in einem auf dem Kolben aufgeschobenen Ring angeordnet ist, der in der Lösestellung an einem hauptzylindergehäusefesten Anschlag anliegt. Diese Lösung bietet eine große Gestaltungsfreiheit bezüglich des Öffnungsmechanismus des Zentralventils.

Eine vorteilhafte Abstimmung des Zentralventil-Schließweges mit dem Zeitpunkt des Abschaltens der Arretierungseinrichtung wird bei einer weiteren vorteilhaften Ausführung der Erfindung dadurch erreicht, daß das Zentralventil durch eine Kraftübertragung zwischen seinem Schließkörper und dem im Kolben geführten Betätigungskolben betätigbar ist.

Der Durchmesser des Kolbens in seinem den Druckraum begrenzenden Bereich kann entweder gleich oder größer sein als sein Durchmesser im Führungsbereich des Ringkolbens.

Um den Ringkolben nach dem Abschalten der Füllstufe in der Ausgangsstellung zu positionieren, ist zwischen dem Anschlag des Ringkolbens im Hauptzylindergehäuse und dem Ringkolben eine Druckfeder vorgesehen.

Eine Erhöhung der Verkehrssicherheit eines mit der erfindungsgemäßen Betätigungseinheit ausgestatteten Kraftfahrzeuges kann schließlich dadurch erreicht werden, daß im Anschlagbereich des Ringkolbens eine Kontakteinrichtung angeordnet ist, durch die eine Warneinrichtung aktivierbar ist. Die Warneinrichtung kann dabei beispielsweise durch eine im Blickfeld des Fahrers angeordnete Kontrollampe gebildet werden, deren Aufleuchten den Fahrer auf eine in der Bremsanlage auftretende Störung aufmerksam macht.

Weitere Einzelheiten, Merkmale und Vorteile der Erfindung gehen aus der nachfolgenden Beschreibung von sechs Ausführungsbeispielen unter Bezugsnahme auf die beiliegende Zeichnung hervor.

Es zeigen:
- Fig. 1: eine erste Ausführungsform der erfindungsgemäßen Betätigungseinheit;
- Fig. 2: eine zweite Ausführungsform des Hauptbremszylinders der erfindungsgemäßen Betätigungseinheit;
- Fig. 3 bis Fig. 6: eine dritte, vierte, fünfte und sechste Ausführungsform des Hauptbremszylinders der erfindungsgemäßen Betätigungseinheit;
- Fig. 7: die sechste Ausführungsform des Hauptbrems- zylinders nach Fig. 6 im betätigten Zustand;
- Fig. 8: eine als Arretierungseinrichtung bei der Ausführung nach Fig. 6 und 7 dienende Hülse in axialer Ansicht; und
- Fig. 9: die in Fig. 8 gezeigte Hülse im Schnitt entlang der Schnittlinie A-A gemäß Fig. 8.

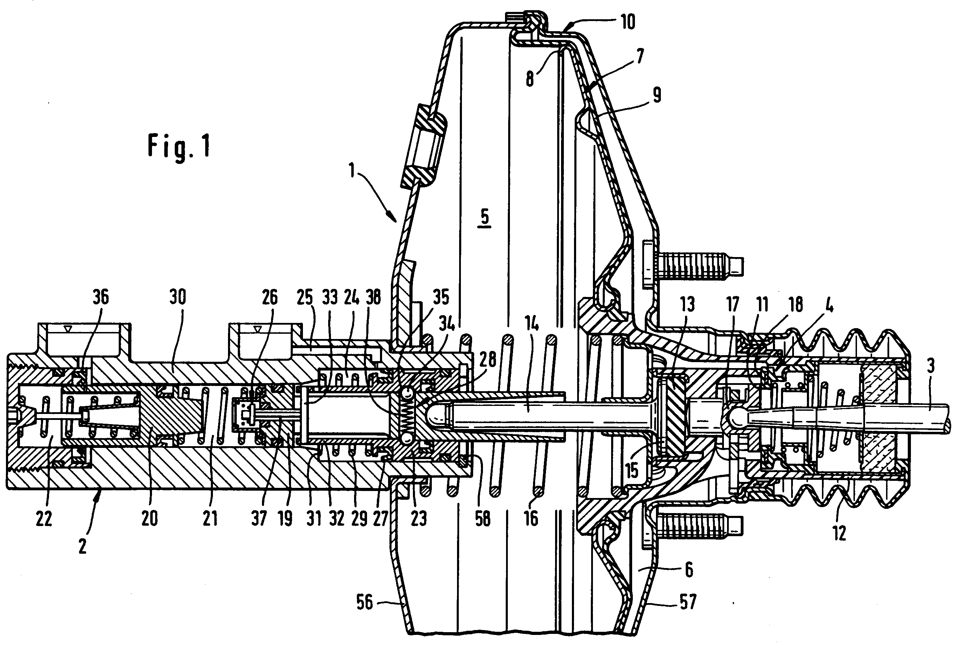

Die in der Zeichnung gezeigte Betätigungseinheit besteht aus einem Unterdruck-Bremskraftverstärker 1, der über ein Eingangsglied 3 durch ein nicht gezeigtes Bremspedal betätigbar ist, sowie einem dem Unterdruck-Bremskraftverstärker 1 nachgeschalteten Hauptbremszylinder, vorzugsweise einem Tandemhauptzylinder 2, der mit einem nicht gezeigten Druckmittelvorratsbehälter in Verbindung steht. Der Unterdruck-Bremskraftverstärker 1 weist dabei zwei schalenförmige, mit ihren offenen Seiten zusammengebaute Gehäuseteile 56,57 auf, die ein Verstärkergehäuse 10 bilden. Das in Fig. 1 linke, mit einem nicht näher bezeichneten pneumatischen Anschluß versehene Gehäuseteil 56 ist fest mit dem Tandem-Hauptbremszylinder 2 verbunden, während im rechten Gehäuseteil 57 ein ein Steuerventil 4 aufnehmendes Steuergehäuse 12 gleitend und abgedichtet geführt ist.

Das Verstärkergehäuse 10 wird durch eine darin angeordnete, aus einem Membranteller 8 und einer daran anliegenden Rollmembran 9 bestehende erste bewegliche Wand 7 in eine evakuierbare Unterdruckkammer 5 sowie eine Arbeitskammer 6 unterteilt. Die Arbeitskammer 6 kann entweder mit der Unterdruckkammer 5 oder bei der Betätigung des Steuerventils 4, mit der Atmosphäre in Verbindung gebracht werden.

Das an sich bekannte Steuerventil 4 wird von einem mit dem Eingangsglied 3 verbundenen Ventilkolben 17 betätigt, der einen Dichtsitz 11 des Steuerventils 4 trägt, dessen zweiter Dichtsitz 18 im Steuergehäuse 12 ausgebildet ist.

Eine in der Zeichnung schematische dargestellte Rückstellfeder 16, die sich an der unterdruckseitigen Stirnwand des Verstärkergehäuses 10 an einem Flansch abstützt, hält die bewegliche Wand 7 in der gezeigten Ausgangsstellung. Die Bremskraft wird über eine in einer stirnseitigen Ausnehmung des Steuergehäuses 12 aufgenommene gummielastische Reaktionsscheibe 13 sowie eine einen Kopfflansch 15 aufweisende Druckstange 14 auf einen ersten Kolben (Primärkolben) 19 des Tandemhauptzylinders 2 übertragen, der mit einem zweiten (Sekundär-) Kolben 20 zusammenwirkt, wobei die Kolben 19,20 im Hauptzylindergehäuse 30 Druckräume 21,22 begrenzen, an die nicht gezeigte Bremskreise angeschlossen sind. Ein koaxial zum Primärkolben 19 angeordneter Ringkolben 23 größeren Durchmessers begrenzt im Hauptzylindergehäuse 30 einen Füllraum 24 mit ringförmigen Querschnitt, der einerseits mittels eines Druckmittelkanals 25 mit dem nicht gezeigten Ausgleichs- oder Druckmittelvorratsbehälter und andererseits über ein vorzugsweise im Primärkolben 19 angeordnetes Zentralventil 26 mit dem Primärdruckraum 21 verbindbar ist, so daß der Füllraum 24 gleichzeitig als Nachlaufraum für den Primärdruckraum 21 dient. Der mittels einer Dichtmanschette 27 gegenüber dem Hauptzylindergehäuse 30 abgedichtete Ringkolben 23 steht dabei über eine lösbare Arretierungseinrichtung 28 in kraftübertragender Verbindung mit dem Primärkolben 19 und wirkt mit einem durch eine im Hauptzylindergehäuse 30 ausgebildete Stufe gebildeten Anschlag 31 zusammen, an dem sich eine den Ringkolben 23 entgegen der Betätigungsrichtung vorspannende Druckfeder 29 abstützt. In der Lösestellung bzw. in der betätigten Stellung nach dem Öffnen der Arretierungseinrichtung 28 wird der Ringkolben 23 mittels der Druckfeder 29 gegen einen zweiten Anschlag 58 gedrückt. Außerdem ist der Ringkolben 23 mit einer axialen Verlängerung 32 versehen, in der ein das Zentralventil 26 betätigender Stift 33 gelagert ist. Die Arretierungsvorrichtung 28 kann beispielsweise durch eine oder mehrere federnd vorgespannte, im Primärkolben 19 geführte Kugeln 34 gebildet sein, die mit einer im Ringkolben 23 ausgebildeten Schräge 35 zusammenwirken. Für einen Einsatz der beschriebenen Betätigungseinheit bei blockiergeschützten Bremsanlagen ist es besonders sinnvoll, wenn der Sekundärkolben 20 als Tauchkolben ausgebildet ist, der mit einer im Hauptzylindergehäuse 30 angeordneten, stehenden Dichtmanschette 36 zusammenwirkt.

Nachfolgend wird die Funktionsweise der in Fig. 1 dargestellten erfindungsgemäßen Betätigungseinheit beschrieben:
Wird das Eingangsglied 3 über das nicht gezeigte Bremspedal in Betätigungsrichtung, in der Zeichnung nach links verschoben, so wird der am Ventilkolben 17 ausgebildete erste Dichtsitz 11 geöffnet, so daß die Arbeitskammer 6 belüftet wird. Da die Unterdruckkammer 5 im Betrieb ständig an eine geeignete Unterdruckquelle angeschlossen ist, verursacht die auf die bewegliche Wand 7 einwirkende pneumatische Druckdifferenz eine Bewegung des mit der beweglichen Wand 7 verbundenen Steuergehäuses 12 in Betätigungsrichtung, die über die Reaktionsscheibe 13 sowie die Druckstange 14 auf den Primärkolben 19 übertragen wird. Durch die kraftschlüssige Verbindung zwischen dem Primärkolben 19 und dem Ringkolben 23 wird letzter vom Primärkolben 19 mitgenommen, wobei das Zentralventil 26 durch Anlage seines Schließkörpers 37 am Stift 33 offengehalten wird. Dadurch wird über die auf dem Ringkolben 23 angeordnete Dichtmanschette 27 sowohl im Füllraum 24 als auch im Primärdruckraum 21 ein hydraulischer Druck aufgebaut, der ein Verschieben des Sekundärkolbens 20 in Betätigungsrichtung zur Folge hat.

Erreicht der im Druckraum (21+24) sich aufbauende Druck einen vorbestimmbaren Wert, bei dem die daraus resultierende, über die im Ringkolben 23 ausgebildete Schräge 35 auf die Kugeln 34 der Arretierungseinrichtung 28 wirkende Kraftkomponente die Kraft der die Kugeln 34 vorspannenden Druckfeder 38 überwindet, so geht die Arretierungseinrichtung 28 auf, so daß der Ringkolben 23 kraftübertragungsmäßig vom Primärkolben 19 abgekoppelt wird und durch die Wirkung der Druckfeder 29 in seine Ausgangsstellung am Anschlag 58 zurückgestellt werden kann. Gleichzeitig hebt der Schließkörper 37 des Zentralventils 26 vom Stift 33 ab, so daß der Primärdruckraum 21 vom Füllraum 24 getrennt wird und eine weitere Druckerhöhung im Primärdruckraum 21 über das Dichtelement des Primärkolbens 19 erfolgt.

Es ist auch denkbar, im Bereich des Anschlags 31 des Ringkolbens 23 eine nicht gezeigte Kontakteinrichtung vorzusehen, durch die eine beispielsweise im Blickfeld des Kraftfahrzeugfahrers angeordnete optische Warneinrichtung, vorzugsweise eine Kontrollampe, aktivierbar ist.

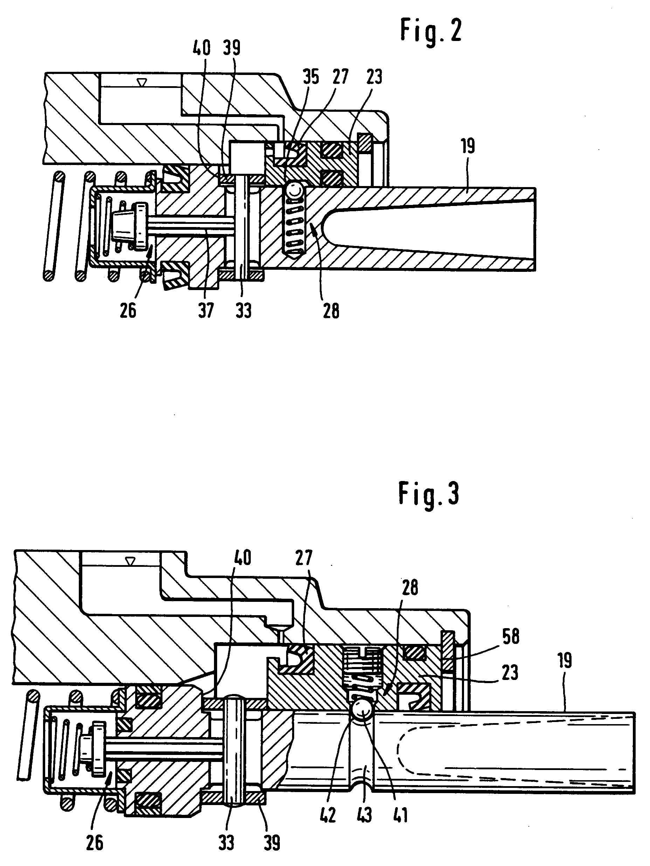

Bei den in den Fig. 2 und 3 gezeigten Ausführungsformen der Erfindung ist der den Öffnungsmechanismus des Zentralventils 26 bildende, senkrecht zur Längsachse des Hauptzylinders 2 angeordnete Stift 33 in einem auf dem Primärkolben 19 aufgeschobenen Ring 39 gelagert, der in der Lösestellung der Betätigungseinheit einerseits an einer am Primärkolben 19 ausgebildeten radialen Ringfläche 40 und andererseits am Ringkolben 23 axial anliegt. Während die Arretierungseinrichtung 28 von ihrem Aufbau her bei der in Fig. 2 dargestellten Variante der in Fig. 1 gezeigten Ausführung entspricht, wird die Arretierungseinrichtung 28 bei dem in Fig. 3 gezeigten Ausführungsbeispiel durch eine oder mehrere im Ringkolben 23 geführte Kugeln 41 gebildet, die mit einer im Primärkolben 19 ausgebildeten Schräge 42 zusammenwirken, die durch eine Radialnut 43 gebildet ist.

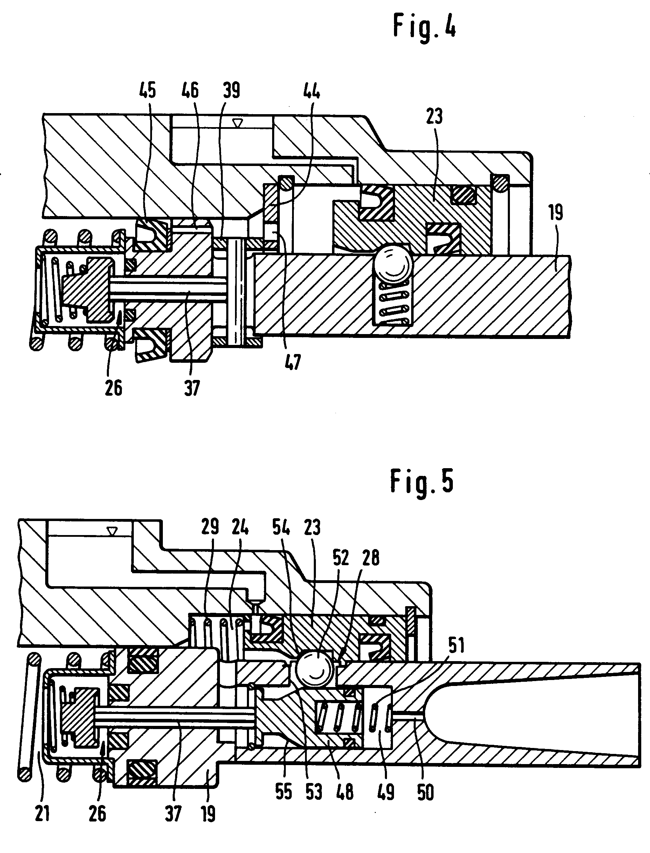

Bei dem in Fig. 4 gezeigten Ausführungsbeispiel der Erfindung liegt der im Zusammenhang mit den Ausführungen nach Fig. 2 und 3 erwähnte Ring 39 an einem hauptzylindergehäusefesten Anschlag an, der beispielsweise durch eine im Anschlagbereich des Ringkolbens 23 angeordnete Ringscheibe 44 gebildet ist. Dies hat zur Folge, daß der Primärdruckraum 21 und der Füllraum 24 bereits am Beginn der Betätigung voneinander getrennt werden, so daß beim Füllvorgang die am Primärkolben 19 angeordnete Dichtmanschette 45 überströmt wird. Zu diesem Zweck ist der Primärkolben 19 mit axialen Bohrungen 46 versehen, während die Ringscheibe 44 Durchlässe 47 aufweist.

Bei der in Fig. 5 gezeigten Ausführungsvariante der Erfindung liegt der Schließkörper 37 des Zentralventils 26 an der Stirnfläche eines im Primärkolben 19 abgedichtet geführten Betätigungskolbens 48 an, der einen zylindrischen Raum 49 begrenzt, der beispielsweise, wie gezeigt, über eine im Primärkolben 19 vorgesehene Bohrung 50 mit der Unterdruckkammer 5 des Bremskraftverstärkers 1 in Verbindung steht. Der Raum 49 nimmt eine den Betätigungskolben 48 entgegen der Schließrichtung des Zentralventils 26 vorspannende Druckfeder 51 auf. Die Arretierungseinrichtung 28 wird bei diesem Ausführungsbeispiel durch Arretierungsglieder 52 gebildet, die in radialen Bohrungen 53 des Primärkolbens 19 angeordnet sind und die mit einer im Ringkolben 23 ausgebildeten ersten Schräge 54 sowie mit einer am Betätigungskolben 48 ausgebildeten zweiten Schräge 55 zusammenwirken.

Bei der Betätigung wird, wie bereits beschrieben, im Druckraum (21+24) ein hydraulischer Druck aufgebaut, dessen Wirkung auf den Betätigungskolben 48 eine Kraft erzeugt, die der Kraft der Druckfeder 51 entgegenwirkt. Wird die letztgenannte Federkraft überwunden, so wird der Betätigungskolben 48 in der Zeichnung nach rechts verschoben, wodurch das Zentralventil 26 geschlossen wird. Gleichzeitig fangen die Arretierungskugeln 52 an, über die zweite Schräge 55 sich radial nach innen zu bewegen, bis sie außer Eingriff mit der im Ringkolben 23 ausgebildeten ersten Schräge 54 kommen. Dadurch wird der Ringkolben 23 vom Primärkolben 19 entkoppelt und kann mittels der vorhin erwähnten Druckfeder 29 in die Ausgangslage positioniert werden.

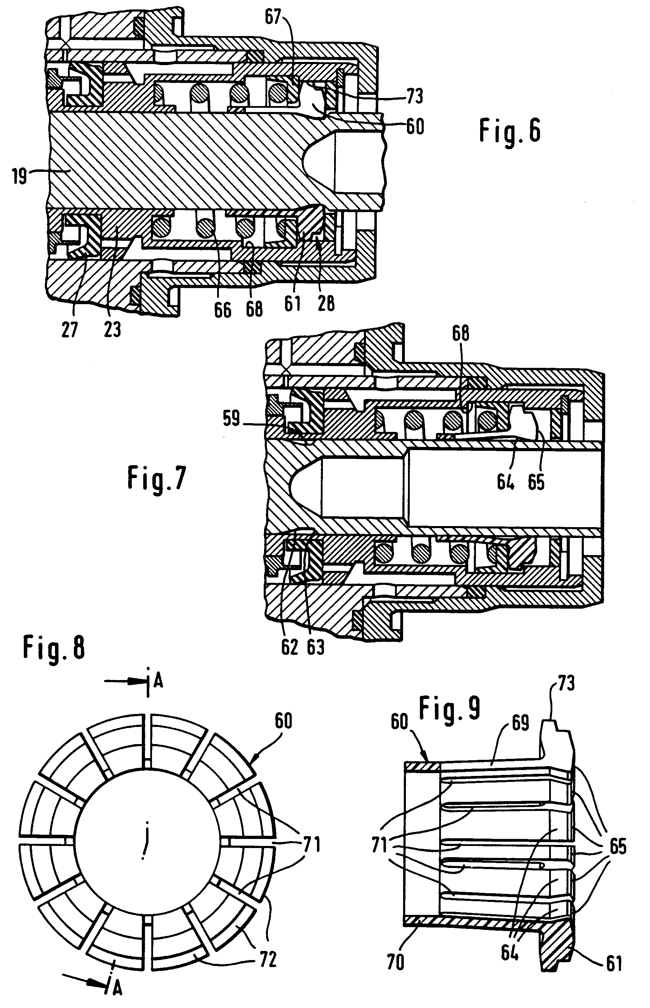

Wie schießlich den Figuren 6 bis 9 zu entnehmen ist, wird die Arretierungseinrichtung 28 der darin gezeigten Ausführungsform durch eine vorzugsweise aus Kunststoff hergestellte Hülse 60 gebildet, die, auf dem Kolben 19 aufgeschoben, in radialer Richtung aufweitbar ausgebildet ist. Die Hülse 60 weist dabei einen radialen Kragen 61 auf, dessen radial innenliegender Bereich kleineren Durchmessers durch eine erste konische Ringfläche 64 (Fig. 7) begrenzt wird, die in der Lösestellung von einer im Kolben 19 ausgebildeten Ringnut 59 aufgenommen wird.

Die Ringnut 59 weist zwei vorzugsweise schräg verlaufende Flanken 62,63 unterschiedlicher Steigung auf, wobei die vorhin erwähnte erste konische Ringfläche 59 des Kragens 61 in eine zweite konische Ringfläche 65 übergeht, die bei der Betätigung des Kolbens 19 mit der in der Zeichnung rechts dargestellten Flanke 63 größerer Steigung zusammenwirkt. Der radial außenliegende Bereich größeren Durchmessers des Kragens 61 wird durch eine zylindrische Fläche 73 gebildet, deren Durchmesser dem Innendurchmesser des Ringkolbens 23 entspricht und die der radialen Abstützung der Hülse 60 am Ringkolben 23 dient.

Eine Kraftübertragung zwischen der Hülse 60 und dem Ringkolben 23 erfolgt mittels einer dazwischen angeordneten Feder 66, deren hülsenseitiges Ende sich an einem am Kragen 61 axial anliegenden Führungsteil 67 abstützt. Der Ringkolben ist dabei mit einer radialen Ringnut 68 rechteckigen Querschnitts versehen, die nach dem Überwinden der Kraft der Feder 66 bzw. der Trennung der beiden Kolben 23,19 ein radiales Aufweiten der Hülse 60 und somit ein Entriegeln der Arretierungseinrichtung 28 ermöglicht. Der Boden der Ringnut 68 dient gleichzeitig als Führungsfläche für das Führungsteil 67.

Wie insbesondere aus Fig. 8 und 9 erhellt, schließt an den vorhin erwähnten radialen Kragen 61 der Hülse ein kegelstumpfförmig ausgebildeter Bereich 69 an, der in einen zylindrischen Abschnitt 70 übergeht, dessen Innendurchmesser dem Außendurchmesser des Kolbens 19 entspricht. Das radiale Aufweiten der Hülse 60 beim Entriegeln der Arretierungseinrichtung 28 wird durch mehrere am Umfang der Hülse 60 regelmäßig verteilte axiale Schlitze 71 erleichtert, die am Übergang zwischen dem zylindrischen Abschnitt 70 und dem kegelstumpfförmigen Bereich 69 enden und die den Kragen 61 sowie den Bereich 69 in radial federnde Segmente 72 unterteilen.

Die Funktion der beschriebenen Arretierungseinrichtung 28 entspricht weitgehend der Funktion der Arretierungseinrichtungen, die im Zusammenhang mit den Fig. 1 und 5 erläutert wurden. Bei einem Verschieben des Kolbens 19 in Betätigungsrichtung wird die auf den Kolben 19 axial wirkende Betätigungskraft über die schräge Flanke 63 der Ringnut 59 auf die zweite konische Ringfläche 65 des Kragen 61 übertragen, so daß der Ringkolben 23 über das Führungsteil 67 sowie die Feder 66 mitgenommen wird. Gleichzeitig entsteht eine radial nach außen wirkende Kraftkomponente, die beim Überwinden der Kraft der Feder 66 bzw. dem Entriegeln der Arretierungseinrichtung 28 im Bereich der im Ringkolben 23 ausgebildeten Ringnut 68 ein radiales Aufweiten des Kragens 61 bzw. der Segmente 72 zur Folge hat, die von der Ringnut 68 aufgenommen werden.

### Bezugszeichenliste

- 1: Unterdruck-Bremskraftverstärker
- 2: Tandemhauptzylinder
- 3: Betätigungsglied
- 4: Steuerventil
- 5: Unterdruckkammer
- 6: Arbeitskammer
- 7: bewegliche Wand
- 8: Membranteller
- 9: Rollmembran
- 10: Verstärkergehäuse
- 11: Dichtsitz
- 12: Steuergehäuse
- 13: Reaktionsscheibe
- 14: Druckstange
- 15: Kopfflansch
- 16: Rückstellfeder
- 17: Ventilkolben
- 18: Dichtsitz
- 19: Primärkolben
- 20: Sekundärkolben
- 21: Druckraum
- 22: Druckraum
- 23: Ringkolben
- 24: Füllraum
- 25: Druckmittelkanal
- 26: Zentralventil
- 27: Dichtmanschette
- 28: Arretierungseinrichtung
- 29: Druckfeder
- 30: Hauptzylindergehäuse
- 31: Anschlag
- 32: Verlängerung
- 33: Stift
- 34: Kugel
- 35: Schräge
- 36: Dichtmanschette
- 37: Schließkörper
- 38: Druckfeder
- 39: Ring
- 40: Ringfläche
- 41: Kugel
- 42: Schräge
- 43: Radialnut
- 44: Ringscheibe
- 45: Dichtmanschette
- 46: Bohrung
- 47: Durchlaß
- 48: Betätigungskolben
- 49: Raum
- 50: Bohrung
- 51: Druckfeder
- 52: Arretierungsglied
- 53: Bohrung
- 54: Schräge
- 55: Schräge
- 56: Verstärkergehäusehälfte
- 57: Verstärkergehäusehälfte
- 58: Anschlag
- 59: Ringnut
- 60: Hülse
- 61: Kragen
- 62: Flanke
- 63: Flanke
- 64: Ringfläche
- 65: Ringfläche
- 66: Feder
- 67: Führungsteil
- 68: Ringnut
- 69: Bereich
- 70: Abschnitt
- 71: Schlitz
- 72: Segment
- 73: Fläche

## Patentansprüche

1. Betätigungseinheit für eine hydraulische Bremsanlage, bestehend aus einem pneumatischen Bremskraftverstärker (1) sowie einem ihm wirkungsmäßig nachgeschalteten Hauptbremszylinder (2) mit mindestens einem einen hydraulischen Druckraum (21) begrenzenden Kolben (19), sowie mit einem mit dem Kolben (19) wirkungsmäßig verbundenen Ringkolben (23) größeren Durchmessers, der einen mit dem Druckraum (21) verbindbaren Füllraum (24) begrenzt, dadurch **gekennzeichnet**, daß der Ringkolben (23) vom Kolben (19) wirkungsmäßig trennbar ist, wenn der auf den Ringkolben (23) wirkende hydraulische Druck einen vorbestimmbaren Wert erreicht.

2. Betätigungseinheit nach Anspruch 1, dadurch **gekennzeichnet**, daß der auf den Ringkolben (23) wirkende Druck der im Druckraum (21) des Hauptbremszylinders (2) herrschende hydraulische Druck ist.

3. Betätigungseinheit nach Anspruch 1 oder 2, dadurch **gekennzeichnet**, daß der Ringkolben (23) nach der Trennung auf dem Kolben (19) verschiebbar angeordnet ist und mit einem Anschlag (31,58) zusammenwirkt.

4. Betätigungseinheit nach einem der Ansprüche 1 bis 3, dadurch **gekennzeichnet,** daß der Füllraum (24) als Nachlaufraum für den vom Kolben (19) begrenzten hydraulischen Druckraum (21) dient.

5. Betätigungseinheit nach einem der Ansprüche 1 bis 4, dadurch **gekennzeichnet**, daß zwischen dem Füllraum (24) und dem Druckraum (21) ein im Kolben (19) angeordnetes Zentralventil (26) vorgesehen ist.

6. Betätigungseinheit nach Anspruch 5, dadurch **gekennzeichnet**, daß das Zentralventil (26) mittels eines senkrecht zur Längsachse des Kolbens (19) stehenden Stiftes (33) betätigbar ist, der in einer axialen Verlängerung (32) des Ringkolbens (23) angeordnet ist.

7. Betätigungseinheit nach Anspruch 5, dadurch **gekennzeichnet**, daß das Zentralventil (26) mittels eines senkrecht zur Längsachse des Kolbens (19) stehenden Stiftes (33) betätigbar ist, der in einem auf dem Kolben (19) aufgeschobenen Ring (39) angeordnet ist, der bis zum Erreichen des vorgegebenen Druckes im Druckraum (21) am Ringkolben (23) anliegt.

8. Betätigungseinheit nach einem der vorhergehenden Ansprüche, dadurch **gekennzeichnet**, daß zwischen dem Kolben (19) und dem Ringkolben (23) eine lösbare Arretierungseinrichtung (28) vorgesehen ist, die bis zum Erreichen des vorgegebenen Druckes ein Mitnehmen des Ringkolbens (23) vom Kolben (19) ermöglicht.

9. Betätigungseinheit nach Anspruch 8, dadurch **gekennzeichnet**, daß die Arretierungseinrichtung (28) durch eine oder mehrere federnd vorgespannte, im Kolben (19) bzw. Ringkolben (23) geführte Kugeln (34,41) gebildet ist, die mit einer im Ringkolben (23) bzw. Kolben (19) ausgebildeten Schräge (35,42) zusammenwirken.

10. Betätigungseinheit nach Anspruch 8, dadurch **gekennzeichnet**, daß die Arretierungseinrichtung (28) durch ein oder mehrere, in radialen Bohrungen (53) im Kolben (19) angeordnete Arretierungsglieder (52) gebildet ist, die einerseits mit einer im Ringkolben (23) ausgebildeten ersten Schräge (54) und andererseits mit einer zweiten Schräge (55) zusammenwirken, die an einem im Kolben (19) verschiebbar geführten, mit dem im Druckraum (21) herrschenden Druck beaufschlagbaren, federnd vorgespannten Betätigungskolben (48) ausgebildet ist.

11. Betätigungseinheit nach Anspruch 8, dadurch **gekennzeichnet**, daß die Arretierungseinrichtung (28) durch eine auf dem Kolben (19) aufgeschobene, radial aufweitbare Hülse (60) gebildet ist, deren radialer Kragen (61) mit einer im Kolben (19) ausgebildeten Ringnut (59) zusammenwirkt.

12. Betätigungseinheit nach Anspruch 11, dadurch **gekennzeichnet**, daß die Ringnut (59) von zwei schräg verlaufenden Flanken (62,63) unterschiedlicher Steigung begrenzt wird, wobei der radiale Kragen (61) radial nach innen durch eine erste konische Ringfläche (64) begrenzt wird, an die eine zweite konische Ringfläche (65) anschließt, die mit der Flanke (63) größerer Steigung zusammenwirkt.

13. Betätigungseinheit nach Anspruch 11, dadurch **gekennzeichnet**, daß zwischen dem Ringkolben (23) und der Hülse (60) eine Feder (66) angeordnet ist, die eine Kraftübertragung von der Hülse (60) auf den Ringkolben (23) ermöglicht.

14. Betätigungseinheit nach Anspruch 11 bis 13, dadurch **gekennzeichnet**, daß der Ringkolben (23) eine radiale Ringnut (68) aufweist, die bei der Betätigung bzw. dem Überwinden der Kraft der Feder (66) ein radiales Aufweiten der Hülse (60) ermöglicht.

15. Betätigungseinheit nach Anspruch 14 dadurch **gekennzeichnet**, daß die Feder (66) an einem am Kragen (61) anliegenden Führungsteil (67) abgestützt ist, dessen zylindrische Fläche am Boden der im Ringkolben (23) ausgebildeten radialen Ringnut (68) geführt wird.

16. Betätigungseinheit nach einem der vorhergehenden Ansprüche, dadurch **gekennzeichnet**, daß der Kragen (61) der Hülse (60) in einen kegelstumpfförmigen Bereich (69) übergeht, an den ein zylindrischer Abschnitt (70) anschließt, dessen Innendurchmesser dem Durchmesser des Kolbens (19) entspricht.

17. Betätigungseinheit nach einem der vorhergehenden Ansprüche 11 bis 16, dadurch **gekennzeichnet**, daß die Hülse (60) mehrere an ihrem Umfang regelmäßig verteilte axiale Schlitze (71) aufweist, die den Kragen (61) in einzelne Segmente (72) unterteilen und am Übergang zwischen dem kegelstumpfförmigen Bereich (69) und dem zylindrischen Abschnitt (70) enden.

18. Betätigungseinheit nach einem der vorhergehenden Ansprüche, dadurch **gekennzeichnet**, daß die Hülse (60) aus Kunststoff besteht.

19. Betätigungseinheit nach einem der vorhergehenden Ansprüche, dadurch **gekennzeichnet**, daß der Füllraum (24) bis zum Erreichen des vorgegebenen Druckes im Druckraum (21) mit dem Druckraum (21) in Verbindung steht.

20. Betätigungseinheit nach Anspruch 1, dadurch **gekennzeichnet**, daß der auf den Ringkolben (23) wirkende Druck der im Füllraum (24) herrschende hydraulische Druck ist.

21. Betätigungseinheit nach Anspruch 5 und 20, dadurch **gekennzeichnet**, daß das Zentralventil (26) mittels eines senkrecht zur Längsachse des Kolbens (19) stehenden Stiftes (33) betätigbar ist, der in einem auf dem Kolben (19) aufgeschobenen Ring (39) angeordnet ist, der in der Lösestellung an einem hauptzylindergehäusefesten Anschlag (44) anliegt.

22. Betätigungseinheit nach Anspruch 5 und 10, dadurch **gekennzeichnet**, daß das Zentralventil (26) durch eine Kraftübertragung zwischen seinem Schließkörper (37) und dem Betätigungskolben (48) betätigbar ist.

23. Betätigungseinheit nach Anspruch 19 oder 22, dadurch **gekennzeichnet**, daß der Durchmesser des Kolbens (19) in seinem den Druckraum (21) begrenzenden Bereich seinem Durchmesser im Führungsbereich des Ringkolbens (23) entspricht.

24. Betätigungseinheit nach Anspruch 19 oder 22, dadurch **gekennzeichnet**, daß der Durchmesser des Kolbens (19) in seinem den Druckraum (21) begrenzenden Bereich größer ist als sein Durchmesser im Führungsbereich des Ringkolbens (23).

25. Betätigungseinheit nach Anspruch 23 oder 24, dadurch **gekennzeichnet**, daß zwischen dem Anschlag (31) und dem Ringkolben (23) eine Druckfeder (29) vorgesehen ist.

26. Betätigungseinheit nach einem der vorhergehenden Ansprüche, dadurch **gekennzeichnet**, daß der Hauptbremszylinder (2) als Tandemhauptzylinder ausgeführt ist, dessen Primärkolben (19) mit dem Ringkolben (23) zusammenwirkt.

27. Betätigungseinheit nach Anspruch 26, dadurch **gekennzeichnet**, daß der Sekundärkolben (20) als Tauchkolben ausgebildet ist, der mit einer stehenden Dichtmanschette (36) zusammenwirkt.

28. Betätigungseinheit nach einem der vorhergehenden Ansprüche, dadurch **gekennzeichnet**, daß im Anschlagbereich des Ringkolbens (23) eine Kontakteinrichtung angeordnet ist, durch die eine Warneinrichtung aktivierbar ist.

## Claims

1. An actuating unit for a hydraulic brake system comprised of a pneumatic brake power booster (1) and a master brake cylinder (2) connected downstream of the brake power booster in terms of effect having at least one piston (19), which confines a hydraulic pressure chamber (21), and having an annular piston (23) of large diameter which is coupled to the piston (19) in terms of effect and confines a filling chamber (24) connectible to the pressure chamber (21),
**characterized** in that the annular piston (23) is adapted to be uncoupled from the piston (19) in terms of effect when the hydraulic pressure acting on the annular piston (23) reaches a predeterminable amount.

2. An actuating unit as claimed in claim 1,
**characterized** in that the pressure acting on the annular piston (23) is the hydraulic pressure prevailing in the pressure chamber (21) of the master brake cylinder (2).

3. An actuating unit as claimed in claim 1 or 2,
**characterized** in that the annular piston (23), after being uncoupled, is slidable on the piston (19) and cooperates with a stop (31, 58).

4. An actuating unit as claimed in any one of the claims 1 to 3,
**characterized** in that the filling chamber (24) serves as a supply chamber for the hydraulic pressure chamber (21) bounded by the piston (19).

5. An actuating unit as claimed in any one of the claims 1 to 4,
**characterized** in that a central valve (26) arranged in the piston (19) is provided between the filling chamber (24) and the pressure chamber (21).

6. An actuating unit as claimed in claim 5,
**characterized** in that the central valve (26) is actuatable by means of a pin (33), which is disposed perpendicularly to the longitudinal axis of the piston (19) and which is located in an axial extension (32) of the annular piston (23).

7. An actuating unit as claimed in claim 5,
**characterized** in that the central valve (26) is actuatable by means of a pin (33) disposed perpendicularly to the longitudinal axis of the piston (19) and located in a ring (39), which ring (39) is slipped on the piston (19) and abuts on the annular piston (23) until the predetermined pressure is reached in the pressure chamber (21).

8. An actuating unit as claimed in any one of the preceding claims,
**characterized** in that a detachable locking device (28) is provided between the piston (19) and the annular piston (23), which permits that the annular piston (23) is entrained by the piston (19) until the attainment of the predetermined pressure.

9. An actuating unit as claimed in claim 8,
**characterized** in that the locking device (28) is formed of one or a plurality of resiliently preloaded balls (34, 41), which are guided in the piston (19) or the annular piston (23) and cooperate with a slope (35, 42) formed in the annular piston (23) or the piston (19).

10. An actuating unit as claimed in claim 8,
**characterized** in that the locking device (28) is formed by one or a plurality of locking elements (52) arranged in radial bores (53) in the piston (19), which, on the one hand, cooperate with a first slope (54) in the annular piston (23) and, on the other hand, cooperate with a second slope (55), which is provided on a resiliently biassed actuating piston (48) that is slidably guided in the piston (19) and is adapted to be acted upon by the pressure prevailing in the pressure chamber (21).

11. An actuating unit as claimed in claim 8,
**characterized** in that the locking device (28) is formed of a radially expandable sleeve (60) slipped on the piston (19), the radial collar (61) of the sleeve (60) cooperating with an annular groove (59) shaped in the piston (19).

12. An actuating unit as claimed in claim 11,
**characterized** in that the annular groove (59) is bounded by two transversely extending flanks (62, 63) of different ascent, while the radial collar (61) is radially inwardly confined by a first conical annular surface (64) adjacent a second conical annular surface (65) that cooperates with the flank (63) of steeper ascent.

13. An actuating unit as claimed in claim 11,
**characterized** in that a spring (66) is compressed between the annular piston (23) and the sleeve (60) permitting transmission of force from the sleeve (60) to the annular piston (23).

14. An actuating unit as claimed in claims 11 to 13,
**characterized** in that the annular piston (23) has a radial annular groove (68), which permits radial expansion of the sleeve (60) on actuation and, respectively, when the force of the spring (66) is overcome.

15. An actuating unit as claimed in claim 14,
**characterized** in that the spring (66) is supported on a guide portion (67) abutting on the collar (61), and the cylindrical surface of the guide portion is guided at the bottom of the radial annular groove (68) formed in the annular piston (23).

16. An actuating unit as claimed in any one of the preceding claims,
**characterized** in that the collar (61) of the sleeve (60) transitions into a truncated-cone shaped area (69) adjacent a cylindrical portion (70) whose internal diameter corresponds to the diameter of the piston (19).

17. An actuating unit as claimed in any one of the preceding claims 11 to 16,
**characterized** in that the sleeve (60) contains a plurality of axial slots (71) evenly spread over its periphery, which axial slots (71) subdivide the collar (61) into single segments (72) and which end at the transition between the truncated-cone shaped area (69) and the cylindrical portion (70).

18. An actuating unit as claimed in any one of the preceding claims,
**characterized** in that the sleeve (60) is made of plastics.

19. An actuating unit as claimed in any one of the preceding claims,
**characterized** in that the filling chamber (24) is in communication with the pressure chamber (21) until the predetermined pressure in the pressure chamber (21) is attained.

20. An actuating unit as claimed in claim 1,
**characterized** in that the pressure acting on the annular piston (23) is the hydraulic pressure prevailing in the filling chamber (24).

21. An actuating unit as claimed in claims 5 and 20,
**characterized** in that the central valve (26) is actuatable by means of a pin (33), which is disposed perpendicularly to the longitudinal axis of the piston (19) and is arranged in a ring (39) that is slipped on the piston (19) and abuts on a stop (44) formed fast with the master cylinder housing in the release position.

22. An actuating unit as claimed in claims 5 and 10,
**characterized** in that the central valve (26) is operable by the transmission of force between its closure member (37) and the actuating piston (48).

23. An actuating unit as claimed in claim 19 or 22,
**characterized** in that the diameter of the piston (19) in its area confining the pressure chamber (21) is equal to its diameter in the guide area of the annular piston (23).

24. An actuating unit as claimed in claim 19 or 22,
**characterized** in that the diameter of the piston (19) in its area confining the pressure chamber (21) is larger than its diameter in the guide area of the annular piston (23).

25. An actuating unit as claimed in claim 23 or 24,
**characterized** in that a compression spring (29) is provided between the stop (31) and the annular piston (23).

26. An actuating unit as claimed in any one of the preceding claims,
**characterized** in that the master brake cylinder (2) is a tandem master cylinder with its primary piston (19) cooperating with the annular piston (23).

27. An actuating unit as claimed in claim 26,
**characterized** in that the secondary piston (20) is a plunger piston which cooperates with an immovable sealing cup (36).

28. An actuating unit as claimed in any one of the preceding claims,
**characterized** in that a contact device is arranged in the abutment area of the annular piston (23) and serves to activate a warning apparatus.

## Revendications

1. Unité d'actionnement pour système de freinage hydraulique, constituée d'un amplificateur pneumatique de force de freinage (1), d'un maîtrecylindre de frein (2) disposé en aval de l'amplificateur en ce qui concerne l'exercice de son action et comportant au moins un piston (19) délimitant une chambre de pression hydraulique (21), et un piston annulaire (23), de plus grand diamètre que le piston (19), qui est relié à ce piston en ce qui concerne l'exercice de son action et qui délimite une chambre de remplissage (24) agencée de façon à pouvoir être reliée à la chambre de pression (21), caractérisée en ce que le piston annulaire (23) est agencé de façon à pouvoir être séparé du piston (19), en ce qui concerne l'exercice de son action, lorsque la pression hydraulique agissant sur le piston annulaire (23) atteint une valeur qui peut être préfixée.

2. Unité d'actionnement selon la revendication 1, caractérisée en ce que la pression agissant sur le piston annulaire (23) est égale à la pression hydraulique régnant dans la chambre de pression (21) du maître-cylindre de frein (2).

3. Unité d'actionnement selon la revendication 1 ou 2, caractérisée en ce que le piston annulaire (23) est disposé de manière à pouvoir coulisser sur le piston (19) après leur séparation et en ce qu'il coopère avec une butée (31, 58).

4. Unité d'actionnement selon l'une des revendications 1 à 3, caractérisée en ce que la chambre de remplissage (24) sert de chambre d'alimentation pour la chambre de pression hydraulique (21) délimitée par le piston (19).

5. Unité d'actionnement selon l'une des revendications 1 à 4, caractérisée en ce qu'une valve centrale (26), disposée dans le piston (19), est prévue entre la chambre de remplissage (24) et la chambre de pression (21).

6. Unité d'actionnement selon la revendication 5, caractérisée en ce que la valve centrale (26) est agencée de façon à pouvoir être actionnée au moyen d'une tige (33) qui est perpendiculaire à l'axe longitudinal du piston (19) et qui est disposée dans une partie de prolongement axial (32) du piston annulaire (23).

7. Unité d'actionnement selon la revendication 5, caractérisée en ce que la valve centrale (26) est agencée de façon à pouvoir être actionnée au moyen d'une tige (33) perpendiculaire à l'axe longitudinal du piston (19) et disposée dans un anneau (39) qui est monté coulissant autour du piston (19) et qui prend appui sur le piston annulaire (23) jusqu'à ce que la pression préfixée soit atteinte dans la chambre de pression (21).

8. Unité d'actionnement selon l'une des revendications précédentes, caractérisée en ce qu'un dispositif d'immobilisation (28), agencé de façon à pouvoir rendu inactif, est prévu entre le piston (19) et le piston annulaire (23), ce dispositif d'immobilisation (28) permettant un entraînement du piston annulaire (23) par le piston (19) jusqu'à ce que la pression préfixée soit atteinte.

9. Unité d'actionnement selon la revendication 8, caractérisée en ce que le dispositif d'immobilisation (28) est constitué d'une ou plusieurs billes (34, 41), soumises à une précontrainte élastique, qui sont guidées dans l'une des deux pièces constituées par le piston (19) et le piston annulaire (23) et qui coopèrent avec une partie inclinée (35, 42) réalisée sur l'autre des deux pièces.

10. Unité d'actionnement selon la revendication 8, caractérisée en ce que le dispositif d'immobilisation (28) est constitué d'un ou plusieurs organes d'immobilisation (52) qui sont disposés dans des perçages radiaux (53) ménagés dans le piston (19) et qui coopèrent d'une part avec une première partie inclinée (54) réalisée sur le piston annulaire (23) et d'autre part avec une seconde partie inclinée (55) qui est réalisée sur un piston d'actionnement (48), soumis à une précontrainte élastique, qui est guidé d'une manière coulissante dans le piston (19) et qui est agencé de façon à pouvoir être soumis à la pression régnant dans la chambre de pression (21).

11. Unité d'actionnement selon la revendication 8, caractérisée en ce que le dispositif d'immobilisation (28) est constitué d'un manchon (60) qui est monté coulissant autour du piston (19) et est expansible radialement et dont une collerette radiale (61) coopère avec une gorge annulaire (59) ménagée dans le piston (19).

12. Unité d'actionnement selon la revendication 11, caractérisée en ce que la gorge annulaire (59) est délimitée par deux flancs (62, 63) qui s'étendent d'une manière inclinée et présentent des inclinaisons différentes, tandis que la collerette radiale (61) est délimitée radialement vers l'intérieur par une première surface annulaire conique (64) à laquelle se raccorde une seconde surface annulaire conique (65) qui coopère avec le flanc (63) ayant la plus grande inclinaison.

13. Unité d'actionnement selon la revendication 11, caractérisée en ce qu'un ressort (66) est disposé entre le piston annulaire (23) et le manchon (60), ce ressort (66) permettant une transmission de force du manchon (60) au piston annulaire( (23).

14. Unité d'actionnement selon l'une des revendications 11 à 13, caractérisée en ce que le piston annulaire (23) comporte une gorge annulaire radiale (68) qui permet une expansion radiale du manchon (60) lors de l'actionnement ou lorsque la force du ressort (66) est vaincue.

15. Unité d'actionnement selon la revendication 14, caractérisée en ce que le ressort (66) prend appui sur une pièce de guidage (67) qui est appliquée sur la collerette (61) et dont une surface cylindrique est guidée sur le fond de la gorge annulaire radiale (68) ménagée dans le piston annulaire (23).

16. Unité d'actionnement selon l'une des revendications précédentes, caractérisée en ce que la collerette (61) du manchon (60) se raccorde à une zone (69) de forme tronconique à laquelle se raccorde une section cylindrique (70) dont le diamètre intérieur est égal au diamètre du piston (19).

17. Unité d'actionnement selon l'une des revendications précédentes 11 à 16, caractérisée en ce que le manchon (60) comporte plusieurs fentes axiales (71) qui sont réparties d'une manière uniforme à sa périphérie et divisent la collerette (61) en segments (72) individuels et qui s'interrompent à l'endroit de la transition entre la zone tronconique (69) et la section cylindrique (70).

18. Unité d'actionnement selon l'une des revendications précédentes. caractérisée en ce que le manchon (60) est en matière plastique.

19. Unité d'actionnement selon l'une des revendications précédentes, caractérisée en ce que la chambre de remplissage (24) communique avec la chambre de pression (21) jusqu'à ce que la pression préfixée soit atteinte dans la chambre de pression (21).

20. Unité d'actionnement selon la revendication 1, caractérisée en ce que la pression agissant sur le piston annulaire (23) est la pression hydraulique régnant dans la chambre de remplissage (24).

21. Unité d'actionnement selon la revendication 20 lorsqu'elle dépend de la revendication 5, caractérisée en ce que la valve centrale (26) est agencée de façon à pouvoir être actionnée au moyen d'une tige (33) perpendiculaire à l'axe longitudinal du piston (19) et disposée dans un anneau (39) qui est monté coulissant autour du piston (19) et qui est appliqué, dans la position non actionnée, sur une butée (44) fixe vis-à-vis du boîtier du maître-cylindre.

22. Unité d'actionnement selon la revendication 10 lorsqu'elle dépend de la revendication 5, caractérisée en ce que la valve centrale (26) est agencée de façon à pouvoir être actionnée au moyen d'une transmission de force entre son obturateur (37) et le piston d'actionnement (48).

23. Unité d'actionnement selon la revendication 19 ou 22, caractérisée en ce que le diamètre du piston (19) dans sa zone délimitée par la chambre de pression (21) est égal à son diamètre dans la zone de guidage du piston annulaire (23).

24. Unité d'actionnement selon la revendication 19 ou 22, caractérisée en ce que le diamètre du piston (19) dans sa zone délimitant la chambre de pression (21) est supérieur à son diamètre dans la zone de guidage du piston annulaire (23).

25. Unité d'actionnement selon la revendication 23 ou 24, caractérisée en ce qu'un ressort de compression (29) est prévu entre la butée (31) et le piston annulaire (23).

26. Unité d'actionnement selon l'une des revendications précédentes, caractérisée en ce que le maître-cylindre de frein (2) est réalisé sous la forme d'un maître-cylindre tandem dont le piston principal (19) coopère avec le piston annulaire (23).

27. Unité d'actionnement selon la revendication 26, caractérisée en ce que le piston secondaire (20) est réalisé sous la forme d'un piston flottant qui coopère avec une coupelle d'étanchéité (36) fixe.

28. Unité d'actionnement selon l'une des revendications précédentes, caractérisée en ce qu'un dispositif de contact, au moyen duquel un dispositif d'avertissement peut être activé, est disposé dans la zone de butée du piston annulaire (23).
